# EUROPEAN PATENT APPLICATION

(11) **EP 2 747 493 A1**
(43) Date of publication of application: **25.06.2014**
(21) Application number: 11870842.9
(22) Date of filing: 16.08.2011
(51) Int. Cl.: H04W 52/04, H04W 52/02

(54) **POWER CONTROL METHOD, BASE STATION AND TERMINAL EQUIPMENT**

(71) Applicant: Fujitsu Limited, Kawasaki-shi, Kanagawa 211-8588 (JP)
(72) Inventor: WANG, Weiwei, Beijing 100025 (CN); LI, Zhaojun, Beijing 100025 (CN); LU, Yanling, Beijing 100025 (CN); XU, Haibo, Beijing 100025 (CN); ZHOU, Hua, Beijing 100025 (CN)
(74) Representative: Schultes, Stephan
(86) International application number: PCT/CN2011/078492
(87) International publication number: WO 2013/023364

(57) **Abstract**

A power control method, a base station and terminal equipment. The method comprises: determining by a macro base station a dormant cell needing to be activated based on a measurement report; and transmitting an activation request to the base station of the dormant cell needing to be activated, the activation request including a cell ID of the dormant cell needing to be activated and a reduction value of the power used by the dormant cell after being activated relative to the maximum power level or an initial power level, a power increasing level and time duration of power or predetermined first time, so that the base station of the dormant cell transmits the signal at power reduced by the reduction value with respect to the maximum power after the dormant cell is activated or transmits the signal at the power that is increased step by step. With the method, the base station of the dormant cell needs not to transmit a signal at maximum power, thereby increasing energy efficiency, needing no multiple processes of detection, reducing signaling overhead, avoiding the degradation of the service quality of a terminal in the macro cell, and solving the problem in the relevant art.

## Description

### Technical Field

The present invention relates to the field of communications, and in particular to a power control method, a base station and terminal equipment.

### Background

In subjects of energy saving of a long-term evolution advanced (LTE-A) network, cells of a network may be divided into a macro cell and a capacity boosting cell; wherein, the macro cell provides basic network coverage, and the capacity boosting cell is activated to share part of a load of the macro cell when the load of the network is relatively high, and enters into a dormant state to reduce energy consumption when the load of the network is relatively low. A capacity boosting cell entering into a dormant state is hereinafter referred to as a dormant cell.

In selecting dormant cells to be activated, a method that can be used currently is that a base station of a macro cell (a macro base station) requests that dormant cells are activated for a period of time, and configures terminal equipment for which it serves to measure signals of the dormant cells, and then the macro base station selects to activate suitable dormant cells according to measurement results fed back by the terminal equipment, and notifies these dormant cells. In this way, the dormant cells receiving the notification will be activated in a manner of maximum power and receive handed over terminal equipment.

Furthermore, in order further to improve energy efficiency, a macro base station will obtain a power level used by the dormant cell when being activated through multi-level detection. The dormant cells will transmit data at a specified power level in each phase, and then the macro base station, according to feedback results of the terminal equipment in each process of detection, selects the dormant cells needing to be activated and the power levels that should be used by them.

It was found by the inventors in the implementation of the present invention that a defect exists in an existing method: multiple processes of detection are needed, which increases signaling overhead, and time consumed in detection will result in degradation of service quality of a terminal in the macro cell.

It should be noted that the above description of the background art is merely provided for clear and complete explanation of the present invention and for easy understanding by those skilled in the art. And it should not be understood that the above technical solution is known to those skilled in the art as it is described in the background art of the present invention.

### Summary

An aspect of embodiments of the present invention is to provide a power control method, a base station and terminal equipment. With the method, multiple processes of detection are not needed, which reduces signaling overhead, avoids the degradation of the service quality of a terminal in the macro cell, and solves the problem in the relevant art.

According to one aspect of the embodiments of the present invention, there is provided a power control method, including:
transmitting, by a macro base station, a probe request message including probe time to a base station of a dormant cell, so that the dormant cell transmits a signal at maximum power within the probe time;
receiving a measurement report for measuring the signal of the dormant cell returned by terminal equipment of a macro cell;
determining a dormant cell needing to be activated based on the measurement report; and
transmitting an activation request to the base station of the dormant cell needing to be activated, the activation request including a cell ID of the dormant cell needing to be activated and a reduction value of power used by the dormant cell after being activated relative to a maximum power level, so that the base station of the dormant cell transmits a signal at power reduced by the reduction value with respect to the maximum power level after the dormant cell is activated.

According to another aspect of the embodiments of the present invention, there is provided a power control method, including:
receiving, by a base station of a dormant cell, a probe request message including probe time transmitted by a macro base station and transmitting a signal at maximum power within the probe time;
receiving an activation request including a cell ID of the dormant cell needing to be activated and a reduction value of power used by the dormant cell after being activated relative to a maximum power level transmitted by the macro base station; and
activating, by the base station of the dormant cell, the dormant cell according to the activation request and transmitting a signal at power reduced by the reduction value with respect to the maximum power level.

According to still another aspect of the embodiments of the present invention, there is provided a macro base station, including:
a first transmitter, configured to transmit a probe request message including probe time to a base station of a dormant cell, so that the dormant cell transmits a signal at maximum power within the probe time;
a first receiver, configured to receive a measurement report for measuring the signal of the dormant cell returned by terminal equipment of a macro cell;
a first determining unit, configured to determine a dormant cell needing to be activated according to the measurement report; and
a second transmitter, configured to transmit an activation request to the dormant cell needing to be activated, the activation request including a reduction value of power used by the dormant cell after being activated relative to a maximum power level.

According to further still another aspect of the embodiments of the present invention, there is provided a base station of dormant cell, including:
a first probe request receiver, configured to receive a probe request message including probe time transmitted by a macro base station and to transmit a signal at maximum power within the probe time;
a first activation request receiver, configured to receive an activation request including a cell ID of the dormant cell needing to be activated and a reduction value of power used by the dormant cell after being activated relative to a maximum power level transmitted by the macro base station;
a first activator, configured to activate the dormant cell according to the activation request; and
a first signal transmitter, configured to transmit a signal at power reduced by the reduction value with respect to the maximum power level.

According to further still another aspect of the embodiments of the present invention, there is provided a power control method, including:
transmitting, by a macro base station, a probe request message including probe time to a base station of a dormant cell, so that the dormant cell transmits a signal at maximum power within the probe time;
receiving a measurement report for measuring the signal of the dormant cell returned by terminal equipment of a macro cell;
determining a dormant cell needing to be activated based on the measurement report; and
transmitting an activation request to the base station of the dormant cell needing to be activated, the activation request including a cell ID of the dormant cell needing to be activated and information related to power control, the information related to power control including an initial power level, a power increasing level and time duration of power or predetermined first time, so that the base station of the dormant cell transmits a signal at power increased step by step based on the information related to power control after the dormant cell is activated.

According to further still another aspect of the embodiments of the present invention, there is provided a power control method, including:
receiving, by a base station of a dormant cell, a probe request message including probe time transmitted by a macro base station, and transmitting a signal at maximum power within the probe time;
receiving information including a cell ID of a dormant cell needing to be activated and information related to power control, the information related to power control including an initial power level, a power increasing level and time duration of power or predetermined first time; and
activating the dormant cell by the base station of the dormant cell according to an activation request, and transmitting a signal at power increased step by step according to the information related to power control in the activation request.

According to further still another aspect of the embodiments of the present invention, there is provided a macro base station, including:
a third transmitter, configured to transmit a probe request message including probe time to a base station of dormant cell, so that the dormant cell transmits a signal at maximum power within the probe time;
a second receiver, configured to receive a measurement report for measuring the signal of the dormant cell returned by terminal equipment of a macro cell;
a fifth determining unit, configured to determine a dormant cell needing to be activated based on the measurement report; and
a fourth transmitter, configured to transmit an activation request to the base station of the dormant cell needing to be activated, the activation request including a cell ID of the dormant cell needing to be activated and information related to power control, the information related to power control including an initial power level, a power increasing level and time duration of power or predetermined first time, so that the base station of the dormant cell transmits a signal at power increased step by step based on the information related to power control after the dormant cell is activated.

According to further still another aspect of the embodiments of the present invention, there is provided a base station of dormant cell, including:
a second probe request receiver, configured to receive a probe request message including probe time transmitted by a macro base station, and transmit a signal at maximum power within the probe time;
a second activation request receiver, configured to receive information including a cell ID of a dormant cell needing to be activated and information related to power control transmitted by the macro base station, the information related to power control including an initial power level, a power increasing level and time duration of power or predetermined first time;
a second activator, configured to activate the dormant cell based on an activation request; and
a second signal transmitter, configured to transmit a signal at power increased step by step based on the information related to power control in the activation request.

According to further still another aspect of the embodiments of the present invention, there is provided a computer-readable program, wherein when the program is executed in a macro base station, the program enables a computer to carry out the power control method as described above in the macro base station.

According to further still another aspect of the embodiments of the present invention, there is provided a storage medium in which a computer-readable program is stored, wherein the computer-readable program enables a computer to carry out the power control method as described above in a macro base station.

According to further still another aspect of the embodiments of the present invention, there is provided a computer-readable program, wherein when the program is executed in a base station of dormant cell, the program enables a computer to carry out the power control method as described above in the base station of dormant cell.

According to further still another aspect of the embodiments of the present invention, there is provided a storage medium in which a computer-readable program is stored, wherein the computer-readable program enables a computer to carry out the power control method as described above in a base station of dormant cell.

The advantage of the embodiments of the present invention resides in that the macro base station transmits an activation request to the dormant cell needing to be activated, the activation request including a reduction value Δ*P* of the power used by the dormant cell after being activated relative to the maximum power level, so that the dormant cell transmits a signal at power reduced by the reduction value Δ*P* with respect to the maximum power after the dormant cell is activated, or the activation request including information related to power control, so that the base station of the dormant cell transmits a signal at power increased step by step and needs not to transmit the signal at maximum power, thereby increasing energy efficiency, needing no multiple processes of detection, reducing signaling overhead, avoiding the degradation of the service quality of a terminal in the macro cell, and solving the problem in the relevant art.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The above and other objects, features and advantages of the present invention will be apparent from the following detailed description in conjunction with the drawings, in which:
Figure 1 is a schematic diagram of the power control method of Embodiment 1 of the present invention;
Figure 2 is a flowchart of the power control method of Embodiment 2 of the present invention;
Figure 3 is a flowchart of the power control method of Embodiment 3 of the present invention;
Figures 4-7 are flowcharts of the method for determining a reduction value of Embodiment 3 of the present invention;
Figure 8 is a schematic diagram of the structure of the macro base station of Embodiment 4 of the present invention;
Figure 9 is a schematic diagram of the structure of the second determining unit of Embodiment 4 of the present invention;
Figure 10 is another schematic diagram of the structure of the second determining unit of Embodiment 4 of the present invention;
Figure 11 is a schematic diagram of the structure of the base station of the dormant cell of Embodiment 5 of the present invention;
Figure 12 is a flowchart of the power control method of Embodiment 6 of the present invention;
Figure 13 is a flowchart of the power control method of Embodiment 7 of the present invention;
Figure 14 is a flowchart of the power control method of Embodiment 8 of the present invention;
Figure 15 is a flowchart of the method for increasing power for transmitting signals of the dormant cell of Embodiment 8 of the present invention;
Figure 16 is a schematic diagram of the structure of the macro base station of Embodiment 9 of the present invention;
Figure 17 is a schematic diagram of the structure of the base station of dormant cell of Embodiment 10 of the present invention;
Figure 18 is a schematic diagram of the structure of the second signal transmitter 1704 of Embodiment 10 of the present invention; and
Figure 19 is another schematic diagram of the structure of the second signal transmitter 1704 of Embodiment 10 of the present invention.

### Detailed Description

Various embodiments of the present invention shall be described with reference to the drawings. These embodiments are illustrative only and are not intended to limit the present invention. For easy understanding of the principle and embodiments of the present invention by those skilled in the art, the embodiments of the present invention shall be described taking an LTE-A system as an example. However, it should be understood that the embodiments of the present invention are not limited thereto, and are applicable to other systems related to power control in the above cases.

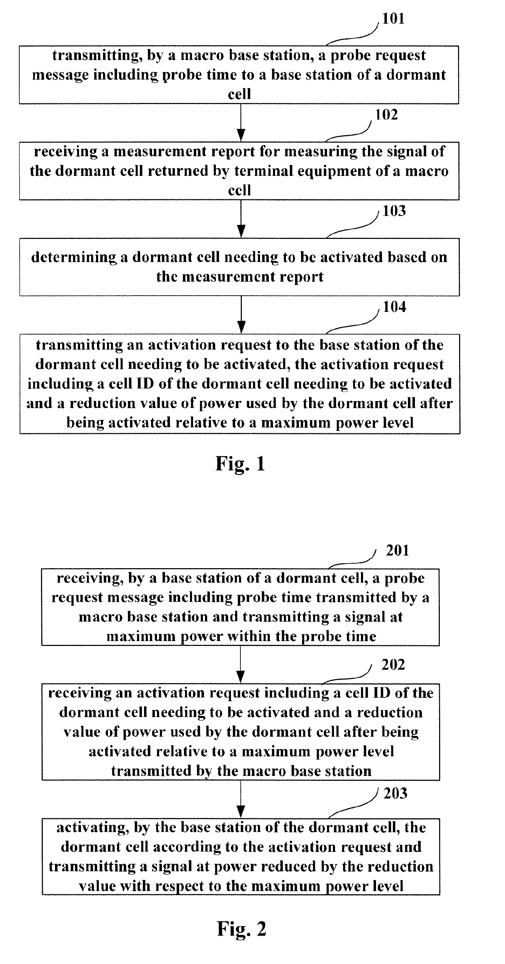

Fig. 1 is a schematic diagram of the power control method of Embodiment 1 of the present invention. As shown in Fig. 1, the method includes:
step 101: transmitting, by a macro base station, a probe request message including probe time to a base station of a dormant cell, so that the dormant cell transmits a signal at maximum power within the probe time;
step 102: receiving a measurement report for measuring the signal of the dormant cell returned by terminal equipment of a macro cell;
step 103: determining a dormant cell needing to be activated based on the measurement report; and
step 104: transmitting an activation request to the base station of the dormant cell needing to be activated, the activation request including a cell ID of the dormant cell needing to be activated and a reduction value Δ*P*₁ of power used by the dormant cell after being activated relative to a maximum power level, so that the base station of the dormant cell transmits a signal at power reduced by the reduction value Δ*P*₁ with respect to the maximum power level after the dormant cell is activated.

Fig. 2 is a flowchart of the power control method of Embodiment 2 of the present invention. As shown in Fig. 2, the method includes:
step 201: receiving, by a base station of a dormant cell, a probe request message including probe time transmitted by a macro base station and transmitting a signal at maximum power within the probe time;
step 202: receiving an activation request including a cell ID of the dormant cell needing to be activated and a reduction value Δ*P*₁ of power used by the dormant cell after being activated relative to a maximum power level transmitted by the macro base station; and
step 203: activating, by the base station of the dormant cell, the dormant cell according to the activation request and transmitting a signal at power reduced by the reduction value Δ*P*₁ with respect to the maximum power level.

It can be seen from the above embodiment that with the method, the base station of the dormant cell needs not to transmit a signal at maximum power, thereby increasing energy efficiency, needing no multiple processes of detection, reducing signaling overhead, avoiding the degradation of the service quality of a terminal in the macro cell, and solving the problem in the relevant art.

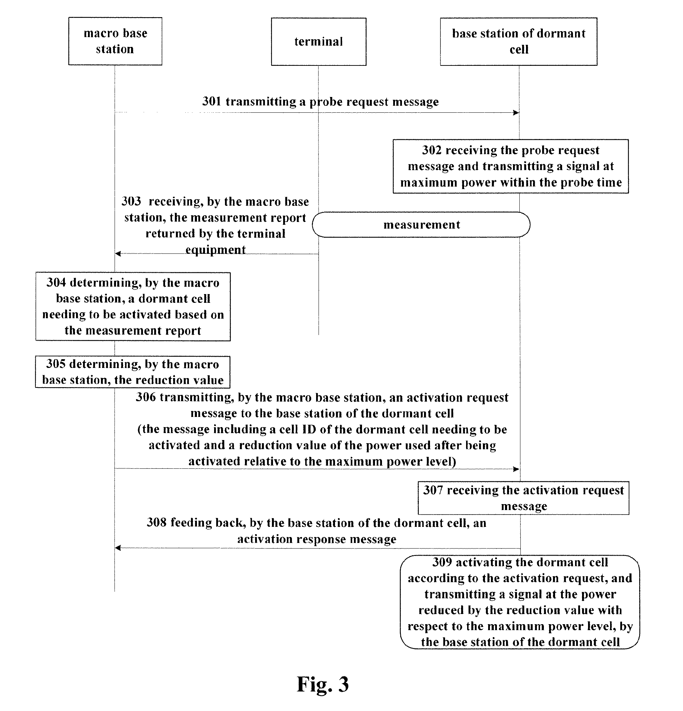

Fig. 3 is a flowchart of the power control method of Embodiment 3 of the present invention. As shown in Fig. 3, the method includes:
step 301: transmitting, by a macro base station, a probe request message including probe time to a base station of a dormant cell;
step 302: receiving, by the base station of the dormant cell, the probe request message including probe time transmitted by the macro base station, and transmitting a signal at maximum power within the probe time;
in this way, terminal equipment of the macro cell may measure a signal of the dormant cell within the probe time, and report a measurement result to the macro base station; wherein, the measurement result may include signal intensity (such as reference signal receiving power, RSRP), or signal quality (such as reference signal receiving quality, RSRQ), etc.;
step 303: receiving, by the macro base station, the measurement report for measuring the signal of the dormant cell returned by the terminal equipment of the macro cell;
step 304: determining, by the macro base station, a dormant cell needing to be activated based on the measurement report;
in this embodiment, the dormant cell needing to be activated may be determined by using any existing manner;
step 305: determining, by the macro base station, a reduction value Δ*P*₁ of the power used by the dormant cell after being activated relative to the maximum power level;
in this embodiment, the macro base station may determine the reduction value Δ*P*₁ according to the measurement report and a load expected to be transferred to the dormant cell or a predefined number of pieces of terminal equipment.

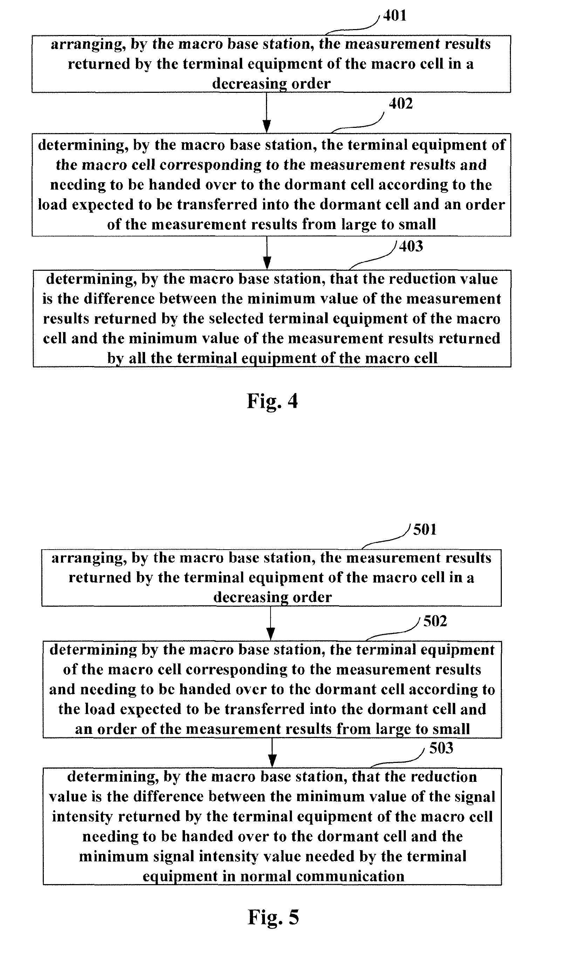

Following description is given with reference to Figs. 4A-4D; however, it is not limited thereto.
Step 306: transmitting, by the macro base station, an activation request to the base station of the dormant cell needing to be activated, the activation request including a cell ID of the dormant cell needing to be activated and a reduction value Δ*P*₁ of the power used after being activated relative to the maximum power level;
step 307: receiving, by the base station of the dormant cell, the activation request including the cell ID of the dormant cell needing to be activated and the reduction value Δ*P*₁ of the power used by the dormant cell after being activated relative to the maximum power level transmitted by the macro base station;
step 308: feeding back, by the base station of the dormant cell, an activation response message to the macro base station;
wherein, the macro base station is notified via the activation response message of whether the base station of the dormant cell activates the dormant cell;
and this step is optional, and if the response message is not fed back, it will be defaulted that the dormant cell is activated;
step 309: activating the dormant cell according to the activation request, and transmitting a signal at the power reduced by the reduction value Δ*P*₁ with respect to the maximum power level, by the base station of the dormant cell;
in this way, the base station of the dormant cell reduces its power for transmitting a signal by the reduction value Δ*P*₁ specified by the macro base station, that is, the power for transmitting a signal is the maximum power subtracted by the reduction value Δ*P*₁.

Fig. 4 is a flowchart of the method for determining a reduction value of Embodiment 3 of the present invention. As shown in Fig. 4, the step of determining by the macro base station the reduction value Δ*P*₁ according to the measurement results and the load expected to be transferred into the dormant cell includes:
step 401: arranging, by the macro base station, the measurement results returned by the terminal equipment of the macro cell in a decreasing order;
wherein, if the measurement results are signal intensity, they may be arranged in an order of the signal intensity from large to small; for example, there are 6 pieces of terminal equipment of the macro base station, as shown in Table 1, the intensity of the signals returned by them are arranged in an order from large to small, such as *P*₁ *> P*₂ *> P*₃ *> P*₄ *> P*₅ *> P*₆ *,* and the terminal equipment to which the signal intensity corresponds is user equipment UE1-UE6.

**Table 1**

| No. | Terminal equipment of the macro base station | Signal intensity |
|---|---|---|
| 1 | UE1 | *P*₁ |
| 2 | UE2 | *P*₂ |
| 3 | UE3 | *P*₃ |
| 4 | UE4 | *P*₄ |
| 5 | UE5 | *P*₅ |
| 6 | UE6 | *P*₆ |

step 402: determining, by the macro base station, the terminal equipment of the macro cell corresponding to the measurement results and needing to be handed over to the dormant cell according to the load expected to be transferred into the dormant cell and an order of the measurement results from large to small;
wherein, at least one piece of terminal equipment of the macro cell corresponding to the measurement results is selected according to the order of the measurement results from large to small, so that the total load of the selected terminal equipment of the macro cell is equivalent to the load expected by the macro base station to be transferred into the dormant cell;
for example, corresponding UE1-UE3 are selected according to the order of the measurement results from large to small, so that the total load of them is equivalent to the load expected by the macro base station to be transferred into the dormant cell;
step 403: determining, by the macro base station, that the reduction value Δ*P*₁ is the difference between the minimum value of the measurement results returned by the selected terminal equipment of the macro cell and the minimum value of the measurement results returned by all the terminal equipment of the macro cell;
in this embodiment, Δ*P*₁ *= P*₃ *- P*₆*.*

Fig. 5 is a flowchart of the method for determining a reduction value of Embodiment 3 of the present invention. As shown in Fig. 5, the step of determining by the macro base station the reduction value Δ*P*₁ according to the measurement results and the load expected to be transferred into the dormant cell includes:
step 501: arranging, by the macro base station, the measurement results returned by the terminal equipment of the macro cell in a decreasing order;
wherein, if the measurement results are signal intensity, the step is similar to step 401, as shown in Table 1;
step 502: determining by the macro base station, the terminal equipment of the macro cell corresponding to the measurement results and needing to be handed over to the dormant cell according to the load expected to be transferred into the dormant cell and an order of the measurement results from large to small;
wherein, the particular step is similar to step 402, which shall not be described herein any further;
for example, as shown in Table 1, the terminal equipment of the macro cell needing to be handed over to the dormant cell includes UE1-UE3;
step 503: determining, by the macro base station, that the reduction value Δ*P*₁ is the difference between the minimum value of the signal intensity returned by the terminal equipment of the macro cell needing to be handed over to the dormant cell and the minimum signal intensity value needed by the terminal equipment in normal communication;
wherein, for terminal equipment in a cell, if normal communication is needed, there will be a needed minimum value (*P*ₘᵢₙ) of the signal intensity; hence, the reduction value Δ*P*₁ = *P*₃ - *P*ₘᵢₙ*.*

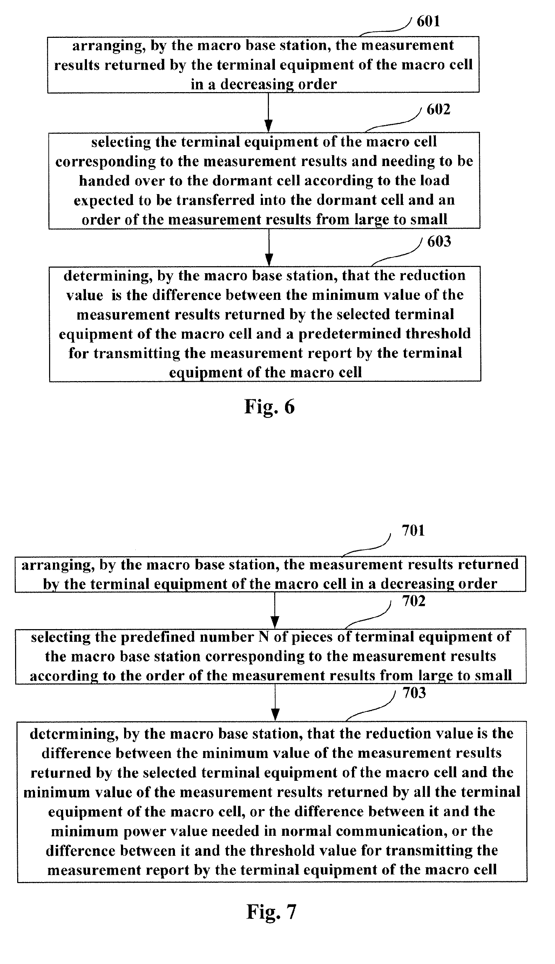

Fig. 6 is a flowchart of the method for determining a reduction value of Embodiment 3 of the present invention. In this embodiment, after measuring the dormant cell, the terminal equipment of the macro cell transmits the measurement report to the macro base station, and the macro base station sets a triggering condition for transmitting a measurement report, such as transmitting the measurement report by the terminal equipment when a signal of the dormant cell is more intense than a certain threshold value (*P_{thrd}*)*.*

As shown in Fig. 6, the step of determining by the macro base station the reduction value Δ*P*₁ according to the measurement results and the load expected to be transferred into the dormant cell or a predefined number of pieces of terminal equipment includes:
step 601: arranging, by the macro base station, the measurement results returned by the terminal equipment of the macro cell in a decreasing order;
wherein, the step is similar to step 401, which shall not be described herein any further;
step 602: selecting the terminal equipment of the macro cell corresponding to the measurement results and needing to be handed over to the dormant cell according to the load expected to be transferred into the dormant cell and an order of the measurement results from large to small;
wherein, the step of determining the terminal equipment of the macro cell needing to be handed over to the dormant cell according to the load expected to be transferred into the dormant cell is similar to step 402, which shall not be described herein any further;
for example, as shown in Table 1, the terminal equipment of the macro cell needing to be handed over to the dormant cell includes UE1-UE3;
step 603: determining, by the macro base station, that the reduction value Δ*P*₁ is the difference between the minimum value of the measurement results returned by the selected terminal equipment of the macro cell and a predetermined threshold for transmitting the measurement report by the terminal equipment of the macro cell;
wherein, the reduction value Δ*P*₁ *= P₃ - P_{thrd}.*

Fig. 7 is a flowchart of the method for determining a reduction value of Embodiment 3 of the present invention. As shown in Fig. 7, the step of determining by the macro base station the reduction value Δ*P*₁ according to the measurement results and a predefined number of pieces of terminal equipment includes:
step 701: arranging, by the macro base station, the measurement results returned by the terminal equipment of the macro cell in a decreasing order;
wherein, the step is similar to step 401 of Fig. 4, which shall not be described herein any further;
step 702: selecting the predefined number N of pieces of terminal equipment of the macro base station corresponding to the measurement results according to the order of the measurement results from large to small;
in this embodiment, if the number N of pieces of terminal equipment of the macro base station is 3, the macro base station selects UE1-UE3 according to the order of the measurement results from large to small;
step 703: determining, by the macro base station, that the reduction value Δ*P*₁ is the difference between the minimum value of the measurement results returned by the selected terminal equipment of the macro cell and the minimum value of the measurement results returned by all the terminal equipment of the macro cell, or the difference between the minimum value of the measurement results returned by the selected terminal equipment of the determined macro cell and the minimum power value (Pₘᵢₙ) needed in normal communication, or the difference between the minimum value of the measurement results returned by the selected terminal equipment of the determined macro cell and the threshold value *(P_{hrd}*) for transmitting the measurement report by the terminal equipment of the macro cell;
in this embodiment, the reduction value Δ*P*₁ *= P*₃ *- P*₆*,* or Δ*P*₁ = *P*₃ - *Pₘᵢₙ,* or Δ*P*₁ *= P*₃ *- P_{thrd}.*

How to determine a reduction value Δ*P*₁ is described above taking Figs. 4-7 as examples. However, what are described above are embodiments of the present invention only, and it is not limited thereto.

It can be seen from the above embodiment that the macro base station transmits an activation request to the dormant cell needing to be activated, the activation request including a reduction value of the power used by the dormant cell after being activated relative to the maximum power level, so that the activated dormant cell transmits a signal at power reduced by the reduction value with respect to the maximum power, and the base station of the dormant cell needs not to transmit a signal at maximum power, thereby increasing energy efficiency, needing no multiple processes of detection, reducing signaling overhead, avoiding the degradation of the service quality of a terminal in the macro cell, and solving the problem in the relevant art.

Embodiments of the present invention further provide a macro base station and a base station of a dormant cell, as described in embodiments 4 and 5 below. As the principles of the macro base station and the base station of the dormant cell for solving problem are similar to that of the above-described power control method based on a macro base station and a base station of a dormant cell, the implementation of the method may be referred to for the implementation of the macro base station and the base station of the dormant cell, and the repeated parts shall not be described any further.

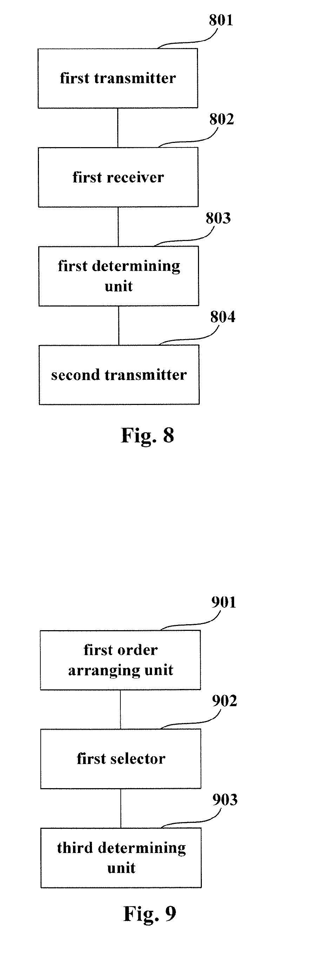

Fig. 8 is a schematic diagram of the structure of the macro base station of Embodiment 4 of the present invention. As shown in Fig. 8, the macro base station includes a first transmitter 801, a first receiver 802, a first determining unit 803 and a second transmitter 804; wherein,
the first transmitter 801 is configured to transmit a probe request message including probe time to a base station of a dormant cell, so that the dormant cell transmits a signal at maximum power within the probe time;
the first receiver 802 is configured to receive a measurement report for measuring the signal of the dormant cell returned by terminal equipment of a macro cell;
the first determining unit 803 is configured to determine a dormant cell needing to be activated according to the measurement report; and
the second transmitter 804 is configured to transmit an activation request to the dormant cell needing to be activated, the activation request including a reduction value Δ*P*₁ of power used by the dormant cell after being activated relative to the maximum power level.

It can be seen from the above embodiment that the macro base station transmits an activation request to the dormant cell needing to be activated, the activation request including a reduction value Δ*P*₁ of the power used by the dormant cell after being activated relative to the maximum power level, so that the activated dormant cell transmits a signal at power reduced by the reduction value Δ*P*₁ with respect to the maximum power, and the base station of the dormant cell needs not to transmit a signal at maximum power, thereby increasing energy efficiency, needing no multiple processes of detection, reducing signaling overhead, avoiding the degradation of the service quality of a terminal in the macro cell, and solving the problem in the relevant art.

In this embodiment, the base station further includes a second determining unit (not shown) configured to determine the reduction value Δ*P*₁ according to the measurement results and the load expected to be transferred into the dormant cell or the predetermined number of the terminal equipment; wherein, the particular method of determination may use the method in Embodiment 3, as described with reference to Figs. 4-7.

Fig. 9 is a schematic diagram of the structure of the second determining unit of Embodiment 4 of the present invention. As shown in Fig. 9, the second determining unit includes: a first order arranging unit 901, a first selector 902 and a third determining unit 903; wherein,
the first order arranging unit 901 is configured to arrange the measurement results returned by the terminal equipment of the macro cell in a decreasing order;
the first selector 902 is configured to select the terminal equipment of the macro cell corresponding to the measurement results and needing to be handed over to the dormant cell according to the load expected to be transferred into the dormant cell and the order of the measurement results from large to small; and
the third determining unit 903 is configured to determine that the reduction value Δ*P*₁ is the difference between the minimum value of the measurement results returned by the terminal equipment of the macro cell selected by the first selector 901 and the minimum value of the measurement results returned by all the terminal equipment of the macro cell, that is, Δ*P*₁ = *P*₃ - *P*₆; or
the reduction value Δ*P*₁ is the difference between the minimum value of the signal intensity returned by the terminal equipment of the macro cell needing to be handed over to the dormant cell selected by the first selector 901 and the minimum signal intensity value needed by the terminal equipment in normal communication, that is, Δ*P*₁ = *P*₃ - *P*ₘᵢₙ; or
the reduction value Δ*P*₁ is the difference between the minimum value of the measurement results returned by the terminal equipment of the macro cell selected by the first selector 901 and a predetermined threshold for transmitting the measurement report by the terminal equipment of the macro cell, that is, Δ*P*₁ *= P*₃ *- P_{thrd}.*

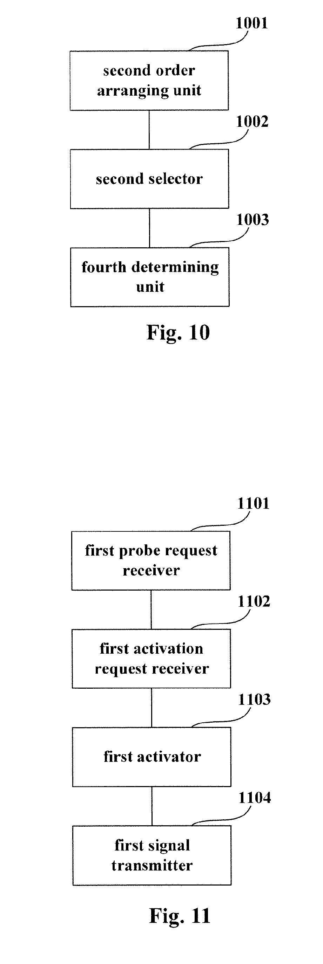

Fig. 10 is another schematic diagram of the structure of the second determining unit of Embodiment 4 of the present invention. As shown in Fig. 10, the second determining unit includes: a second order arranging unit 1001, a second selector 1002 and a fourth determining unit 1003; wherein,
the second order arranging unit 1001 is configured to arrange the measurement results returned by the terminal equipment of the macro cell in a decreasing order;
the second selector 1002 is configured to select the terminal equipment of the macro base station corresponding to the measurement results and needing to be handed over to the dormant cell according to the predetermined number of the terminal equipment and the order of the measurement results from large to small; and
the fourth determining unit 1003 is configured to determine that the reduction value is the difference between the minimum value of the measurement results returned by the terminal equipment of the macro cell selected by the second selector 1002 and the minimum value of the measurement results returned by all the terminal equipment of the macro cell, that is, Δ*P*₁ = *P*₃ - *P*₆ ; or
the reduction value is the difference between the minimum value of the signal intensity returned by the terminal equipment of the macro cell needing to be handed over to the dormant cell selected by the second selector 1002 and the minimum signal intensity value needed by the terminal equipment in normal communication, that is, Δ*P*₁ = *P*₃ - *P*ₘᵢₙ; or
the reduction value is the difference between the minimum value of the measurement results returned by the terminal equipment of the macro cell selected by the second selector 1002 and the threshold for transmitting the measurement report by the terminal equipment of a predetermined macro cell, that is, Δ*P*₁ *= P*₃ *- P_{thred}.*

Fig. 11 is a schematic diagram of the structure of the base station of the dormant cell of Embodiment 5 of the present invention. As shown in Fig. 11, the base station of the dormant cell includes: a first probe request receiver 1101, a first activation request receiver 1102, a first activator 1103 and a first signal transmitter 1104; wherein,
the first probe request receiver 1101 is configured to receive a probe request message including probe time transmitted by a macro base station and to transmit a signal at maximum power within the probe time; the first activation request receiver 1102 is configured to receive an activation request including the cell ID of the dormant cell needing to be activated and the reduction value Δ*P*₁ of the power used by the dormant cell after being activated relative to the maximum power level transmitted by the macro base station; the first activator 1103 is configured to activate the dormant cell according to the activation request; and the first signal transmitter 1104 is configured to transmit a signal at power reduced by the reduction value Δ*P*₁ with respect to the maximum power level.

It can be seen from the above embodiment that the macro base station transmits an activation request to the dormant cell needing to be activated, the activation request including a reduction value Δ*P*₁ of the power used by the dormant cell after being activated relative to the maximum power, so that the activated dormant cell transmits a signal at power reduced by the reduction value Δ*P*₁ with respect to the maximum power, and the base station of the dormant cell needs not to transmit a signal at maximum power, thereby increasing energy efficiency, needing no multiple processes of detection, reducing signaling overhead, avoiding the degradation of the service quality of a terminal in the macro cell, and solving the problem in the relevant art.

In the above embodiment, the macro base station indicates a reduction value Δ*P*₁ of the power used by the dormant cell after being activated relative to the maximum power level to the dormant cell needing to be activated, and this method is referred to as a single power level method. Similar to this method, a power increasing method further be used for power control, which shall be described below with reference to accompanying drawings.

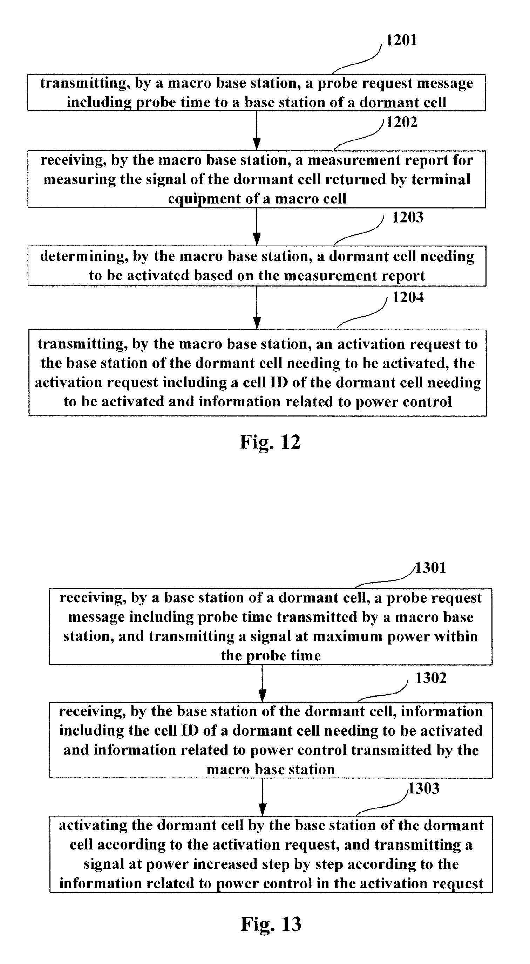

Fig. 12 is a flowchart of the power control method of Embodiment 6 of the present invention. As shown in Fig. 12, the method includes:
step 1201: transmitting, by a macro base station, a probe request message including probe time to a base station of a dormant cell, so that the dormant cell transmits a signal at maximum power within the probe time;
step 1202: receiving, by the macro base station, a measurement report for measuring the signal of the dormant cell returned by terminal equipment of a macro cell;
step 1203: determining, by the macro base station, a dormant cell needing to be activated based on the measurement report; and
step 1204: transmitting, by the macro base station, an activation request to the base station of the dormant cell needing to be activated, the activation request including a cell ID of the dormant cell needing to be activated and information related to power control, the information related to power control including an initial power level *Pᵢₙᵢₜ*, a power increasing level Δ*P*₂ and time duration *T*₁ of power or predetermined first time *T*₂, so that the base station of the dormant cell transmits a signal at power increased step by step based on the information related to power control after the dormant cell is activated.

In this embodiment, the information related to power control in the activation request may further include a load threshold value *L_{thrd}* of the macro base station. Therefore, after receiving the activation request, the base station of the dormant cell activates the dormant cell, and increases the power step by step according to the information related to power control, until the load of the macro cell is less than the load threshold value *L_{thrd}*;
where, in this embodiment, the initial power level *Pᵢₙᵢₜ* is the power level used when the dormant cell is initially activated; the power increasing level Δ*P*₂ is a power value increased in each time of power increase; the time duration *T*₁ of power denotes the time of operation in the current power level if the power of the dormant cell is increased; the load threshold value *L_{thrd}* of the macro base station denotes a maximum value of the load of the macro base station when the power increase of the dormant cell is terminated; and the predetermined first time *T*₂ refers to that no terminal equipment of the macro base station is handed over to the dormant cell , that is, there exists no handed over terminal equipment from the macro base station, within the first time *T₂*.

In this embodiment, the power increasing level Δ*P*₂*,* the time duration *T*₁ of power and the predetermined first time *T*₂ may be preset or predetermined in this method in any manner as actually required.

Fig. 13 is a flowchart of the power control method of Embodiment 7 of the present invention. As shown in Fig. 13, the method includes:
step 1301: receiving, by a base station of a dormant cell, a probe request message including probe time transmitted by a macro base station, and transmitting a signal at maximum power within the probe time;
step 1302: receiving, by the base station of the dormant cell, information including the cell ID of a dormant cell needing to be activated and information related to power control transmitted by the macro base station, the information related to power control including an initial power level *Pᵢₙᵢₜ,* a power increasing level Δ*P*₂ and time duration *T*₁ of power or predetermined first time *T*₂*;*
wherein, after the dormant cell transmits the signal at the maximum power, the terminal equipment of the macro base station may measure the signal and feed a measurement report back to the macro base station, and the macro base station transmits an activation request to a base station of a dormant cell after determining the dormant cell needing to be activated according to the measurement report;
step 1303: activating the dormant cell by the base station of the dormant cell according to the activation request, and transmitting a signal at power increased step by step according to the information related to power control in the activation request;
wherein, the base station of the dormant cell may activate the dormant cell according to the ID of the dormant cell needing to be activated, and increase the power step by step for transmitting the signal according to the information related to power control in the activation request;
in this embodiment, in initially activating the dormant cell, the base station of the dormant cell transmits a signal at the initial power level *Pᵢₙᵢₜ,* then increases the power increasing level Δ*P*₂ on the basis of the current initial power level *Pᵢₙᵢₜ* if the time of transmitting the signal at the initial power level *Pᵢₙᵢₜ* reaches the time duration *T*₁ of power, or no terminal equipment of the macro base station is handed over to the dormant cell within the predetermined first time *T*₂, and finally transmits the signal at the power increased by the power increasing level Δ*P*₂. And so on, the base station of the dormant cell increases the power increasing level Δ*P*₂ on the basis of the current power level, and then transmits the signal at the power increased by the power increasing level Δ*P*₂. In this way, the base station of the dormant cell may increase step by step the power for transmitting a signal of the base station of the dormant cell.

In this embodiment, in order to avoid waste of resources of the macro base station, the information related to power control transmitted by the macro base station may further include a load threshold value *L_{thrd}* of the macro base station. Hence, before the base station of the dormant cell increases the power increasing level Δ*P*₂ on the basis of the current power level, it may further judge whether the current load of the macro base station is higher than the load threshold value *L_{thrd}* of the macro base station; and the base station of the dormant cell only increases the power increasing level Δ*P*₂ on the basis of the current power level when it is higher than the load threshold value *L_{thrd};* otherwise, the base station of the dormant cell does not increase the power increasing level.

It can be seen from the above embodiment that the macro base station transmits an activation request to the dormant cell needing to be activated, the activation request including information related to power control, the information including an initial power level *Pᵢₙᵢₜ*, a power increasing level Δ*P*₂ and time duration *T*₁ of power or predetermined first time *T*₂*,* or further including a load threshold value *L_{thrd}* of the macro base station. In this way, the base station of the dormant cell needs not to transmit a signal at maximum power, thereby increasing energy efficiency, needing no multiple processes of detection, reducing signaling overhead, avoiding the degradation of the service quality of a terminal in the macro cell, and solving the problem in the relevant art.

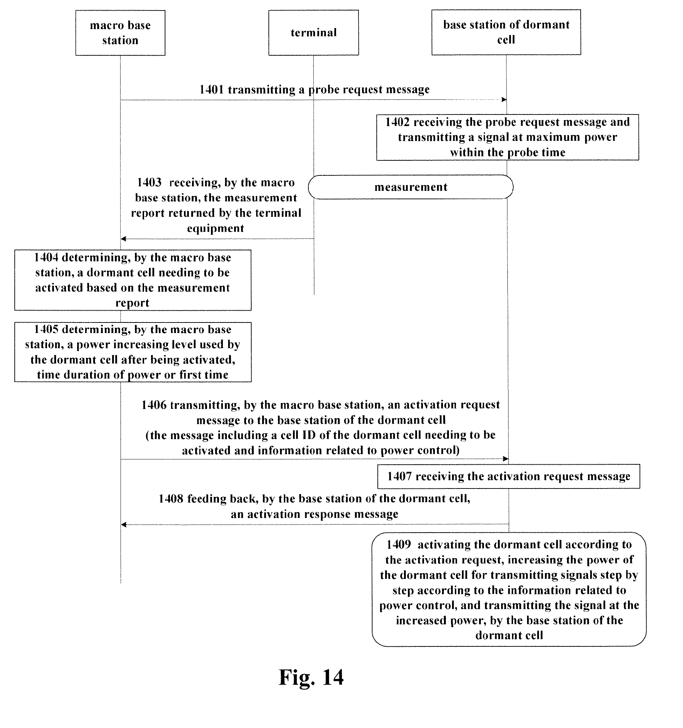

Fig. 14 is a flowchart of the power control method of Embodiment 8 of the present invention. As shown in Fig. 14, the method includes:
step 1401: transmitting, by a macro base station, a probe request message including probe time to a base station of a dormant cell;
step 1402: receiving, by the base station of the dormant cell, the probe request message including the probe time transmitted by the macro base station and transmitting a signal at maximum power within the probe time;
thus, the terminal equipment of the macro cell may measure a signal of the dormant cell within the probe time, and send a measurement report to the macro base station; wherein, the measurement report may include signal intensity (such as reference signal receiving power, RSRP), or signal quality (such as reference signal receiving quality, RSRQ), etc.;
step 1403: receiving, by the macro base station, the measurement report for measuring the signal of the dormant cell returned by the terminal equipment of the macro cell;
step 1404: determining, by the macro base station, a dormant cell needing to be activated based on the measurement report;
in this embodiment, the dormant cell needing to be activated may be determined by using any existing manner;
step 1405: determining, by the macro base station, a power increasing level Δ*P*₂ used by the dormant cell after being activated, time duration *T*₁ of power or predetermined first time *T*₂;
in this embodiment, the above parameter values may be set as actually required, and following description is given to some manners of setting by way of examples.

First, setting the power increasing level Δ*P*₂.

Herein, the macro base station may set the power increasing level Δ*P*₂ according to the number of pieces of terminal equipment or the load expected to be transferred to the dormant cell after each time of increasing the power level by the base station of the dormant cell;
wherein, the macro base station sets a power increasing level according to the load expected to be transferred to the dormant cell after each time of increasing the power level, so as to ensure that part of the loads will always be transferred to the dormant cell after each time of increasing the power level; for example, after the set power increasing level Δ*P*₂ is used, at least a load of 1 Mbps may be accommodated by the dormant cell each time.
or, the macro base station sets a power increasing level Δ*P*₂ according to the number of pieces of terminal equipment expected to be transferred to the dormant cell after each time of increasing the power level, so as to ensure that terminal equipment will always be transferred to the dormant cell after each time of increasing the power level; for example, after the set power increasing level Δ*P*₂ is used, at least one piece of terminal equipment is handed over to the dormant cell each time.

Second, setting the time duration *T*₁ of power.

In this embodiment, the time duration *T*₁ of power is determined according to the time needed in handing each piece of terminal equipment over to the dormant cell multiplied by a maximum value of an estimated number of pieces of terminal equipment handed over in each time of increasing the power level, that is, the time duration *T*₁ of power is equal to the time needed in handing each piece of terminal equipment over to the dormant cell multiplied by a maximum value the number of pieces of terminal equipment that is handed over;
after determining the power increasing level, the macro base station may estimate the number of pieces of terminal equipment transferred to the dormant cell after each time of increasing the power level; as the numbers of pieces of terminal equipment transferred to the dormant cell after each time of increasing the power level may be different, the maximum number of pieces of terminal equipment needing to be transferred may be selected, then an estimated value of the time duration *T*₁ of power may be obtained according to the time needed in handing each piece of terminal equipment over to the dormant cell multiplied by the maximum number of pieces of terminal equipment that is handed over, and the estimated value is taken as the time duration *T*₁ of power;
in this embodiment, the time needed in averagely transferring certain loads or handing over a certain number of pieces of terminal equipment, or the maximum time needed in transferring to certain loads or handing over a certain number of pieces of terminal equipment, may be obtained according to history information on handing over terminal equipment by the macro base station to the dormant cell, for example, including the time needed in transferring certain loads or handing over a certain number of pieces of terminal equipment, and the time is taken as the time duration *T*₁ of power;
wherein, the certain loads are equivalent to the loads considered in setting the power increasing level, and the certain number of pieces of terminal equipment is equivalent to the number of pieces of terminal equipment considered in setting the power increasing level.

Third, setting the first time *T*₂.

In this embodiment, information on the time interval between handing consecutive two pieces of terminal equipment over to the dormant cell is obtained according to the history information on handing over terminal equipment by the macro base station to the dormant cell, the obtained time information is averaged, and the value obtained by averaging is taken as the first time *T*₂;
or, the maximum value in the obtained time information, that is, the maximum value of the time interval between handing consecutive two pieces of terminal equipment over to the dormant cell, is taken as the first time *T*₂;
or, the first time *T*₂ is determined according to the moving speed of the terminal equipment;
wherein, when the moving speed is relatively high (such as higher than 50 m/s), the time may be set as a relatively large value; and when the moving speed is relatively low (such as lower than 10 m/s), the time may be set as a relatively small value, thereby forming a table of relationship between moving speeds and the first time *T*₂. What are described above are embodiments of the present invention only, and the above times and moving speeds may be determined as actually required.

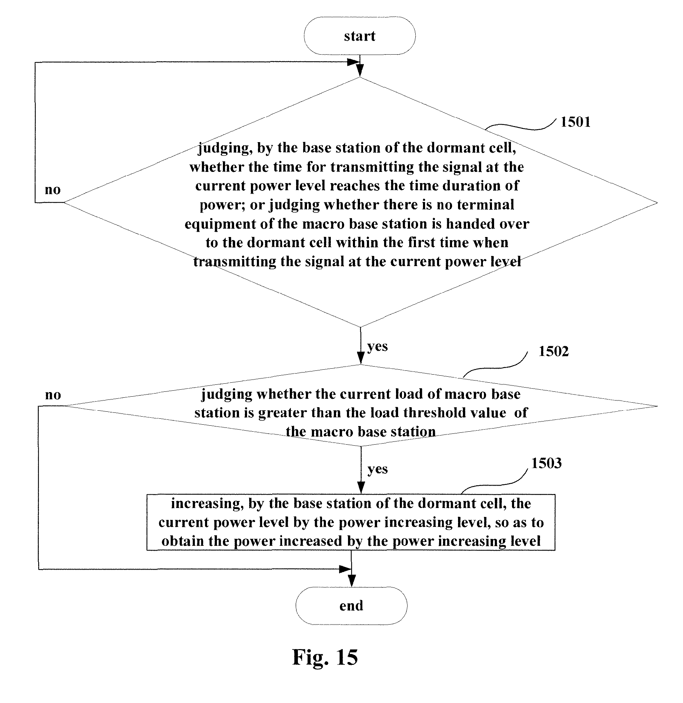

Step 1406: transmitting, by the macro base station, an activation request to the base station of the dormant cell needing to be activated, the activation request including the cell ID of the dormant cell needing to be activated and information related to power control;
in this embodiment, the information related to power control includes an initial power level *Pᵢₙᵢₜ,* a power increasing level Δ*P*₂ and time duration *T*₁ of power or predetermined first time *T*₂;
and it may further include a load threshold value *L_{thrd}* of the macro base station, which is optional;
step 1407: receiving, by the base station of the dormant cell, the activation request including the cell ID of the dormant cell needing to be activated and the information related to power control;
step 1408: feeding back, by the base station of the dormant cell, an activation response message to the macro base station;
wherein, the macro base station is notified via the activation response message of whether the base station of the dormant cell activates the dormant cell;
and this step is optional, and if the response message is not fed back, it will be defaulted that the dormant cell is activated;
step 1409: activating the dormant cell according to the activation request, increasing the power of the dormant cell for transmitting signals step by step according to the information related to power control, and transmitting the signal at the increased power, by the base station of the dormant cell;
in this embodiment, in case of the current power level, the base station of the dormant cell increases the power of the dormant cell for transmitting signals according to the information related to power control, by using the manner below:
as shown in Fig. 15, the manner includes:
   step 1501: judging, by the base station of the dormant cell, whether the time for transmitting the signal at the current power level reaches the time duration *T*₁ of power; or judging whether there is no terminal equipment of the macro base station is handed over to the dormant cell within the first time *T*₂ when transmitting the signal at the current power level;
   step 1502: judging, by the base station of the dormant cell, whether the current load of macro base station is greater than the load threshold value *L_{thrd}* of the macro base station if the result of judgment in step 1501 is yes;
   wherein, the current load of macro base station may be notified by the macro base station to the base station of the dormant cell;
   step 1503: increasing, by the base station of the dormant cell, the current power level by the power increasing level Δ*P*₂ if the result of judgment in step 1502 is that the current load of the macro base station is greater than the load threshold value *L_{thrd}* of the macro base station, so as to obtain the power increased by the power increasing level.

In step 1502, if the result of judgment is no, the current power level is not increased, the base station of the dormant cell transmits the signal by still using the current power, and the process is terminated.

And so on, the base station of the dormant cell is made to transmit the signal at the power increased step by step.

It can be seen from the above embodiment that the macro base station transmits an activation request to the dormant cell needing to be activated, the activation request including information related to power control. The base station of the dormant cell is made to transmit the signal at the power increased step by step, and needs not to transmit a signal at maximum power, thereby increasing energy efficiency, needing no multiple processes of detection, reducing signaling overhead, avoiding the degradation of the service quality of a terminal in the macro cell, and solving the problem in the relevant art.

Embodiments of the present invention further provide a macro base station and a base station of a dormant cell, as described in embodiments 9 and 10 below. As the principles of the macro base station and the base station of the dormant cell for solving problem are similar to that of the above-described power control method based on a macro base station and a base station of a dormant cell, the implementation of the method may be referred to for the implementation of the macro base station and the base station of the dormant cell, and the repeated parts shall not be described any further.

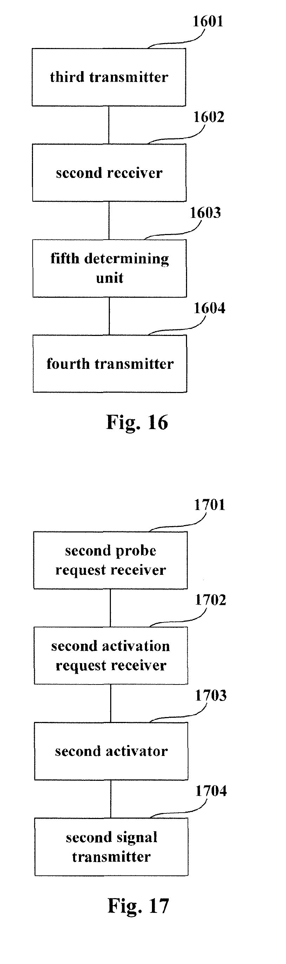

Fig. 16 is a schematic diagram of the structure of the macro base station of Embodiment 9 of the present invention. As shown in Fig. 16, the macro base station includes: a third transmitter 1601, a second receiver 1602, a fifth determining unit 1603 and a fourth transmitter 1604; wherein,
the third transmitter 1601 is configured to transmit a probe request message including probe time to a base station of a dormant cell, so that the dormant cell transmits a signal at maximum power within the probe time;
the second receiver 1602 is configured to receive a measurement report for measuring the signal of the dormant cell returned by terminal equipment of a macro cell;
the fifth determining unit 1603 is configured to determine a dormant cell needing to be activated based on the measurement report; and
the fourth transmitter 1604 is configured to transmit an activation request to the base station of the dormant cell needing to be activated, the activation request including the cell ID of the dormant cell needing to be activated and information related to power control, the information related to power control including an initial power level *Pᵢₙᵢₜ*, a power increasing level Δ*P*₂ and time duration *T*₁ of power or predetermined first time *T*₂, so that the base station of the dormant cell transmits a signal at power increased step by step based on the information related to power control after the dormant cell is activated.

Furthermore, in this embodiment, the macro base station includes an increasing level setting unit, time duration of power determining unit and a first time determining unit (not shown); wherein,
the increasing level setting unit is configured to set the power increasing level according to the load or the number of the terminal equipment expected to be transferred into the dormant cell after the power level of the base station of the dormant cell is increased each time;
the time duration of power determining unit is configured to determine the time duration *T*₁ of power according to a value obtained through multiplying the time needed for each terminal equipment to hand over to the dormant cell by the estimated maximum value of the number of the terminal equipment handed over after the power of the base station of the dormant cell is increased each time; or to obtain the average time needed in transferring a certain load or handing over a certain number of terminal equipment according to historical information on the terminal equipment of the macro base station handed over to the dormant cell, or to obtain the maximum time needed in transferring a certain load or handing over a certain number of terminal equipment according to historical information on the terminal equipment of the macro base station handed over to the dormant cell, and to take the time as the time duration *T*₁ of power;
and the first time determining unit is configured to obtain information on the time interval of two terminal equipment handed over to the dormant cell successively according to historical information on the terminal equipment of the macro base station handed over to the dormant cell, average the obtained the time interval, and take the obtained averaged value as the first time *T*₂; or take the maximum time interval of two terminal equipment handed over to the dormant cell successively as the first time *T*₂; or determine the first time *T*₂ according to the moving speed of the terminal equipment.

Furthermore, the information related to power control in the activation request further includes a load threshold value *L_{thrd}* of the macro base station, so as to avoid waste of resources of the macro base station.

Fig. 17 is a schematic diagram of the structure of the base station of dormant cell of Embodiment 10 of the present invention. As shown in Fig. 17, the base station of dormant cell includes: a second probe request receiver 1701, a second activation request receiver 1702, a second activator 1703 and a second signal transmitter 1704; wherein,
the second probe request receiver 1701 is configured to receive a probe request message including probe time transmitted by a macro base station, and transmit a signal at maximum power within the probe time;
the second activation request receiver 1702 is configured to receive the information including the cell ID of a dormant cell needing to be activated and information related to power control transmitted by the macro base station, the information related to power control including an initial power level *Pᵢₙᵢₜ,* a power increasing level Δ*P*₂ and time duration *T*₁ of power or predetermined first time *T*₂;
the second activator 1703 is configured to activate the dormant cell based on the activation request; and
the second signal transmitter 1704 is configured to transmit a signal at power increased step by step based on the information related to power control in the activation request.

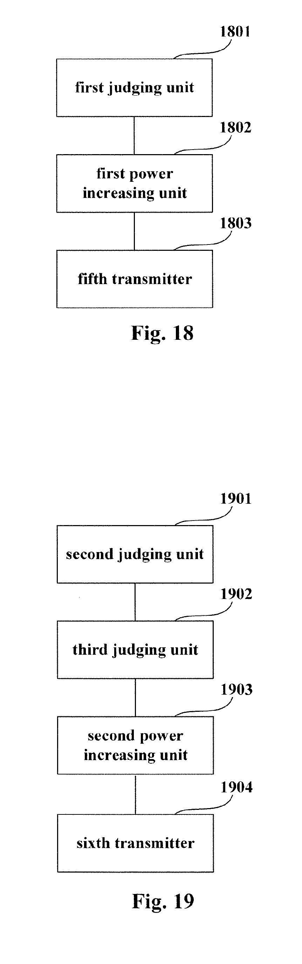

Fig. 18 is a schematic diagram of the structure of the second signal transmitter 1704 of Embodiment 10 of the present invention. When the base station of the dormant cell transmits a signal at the current power level, the second signal transmitter 1704 determines whether to increase the power increasing level, and transmits signals at increased power when the power increasing level is increased. In such a case, the second signal transmitter 1704 includes: a first judging unit 1801, a first power increasing unit 1802 and a fifth transmitter 1803; wherein,
the first judging unit 1801 is configured to judge whether the time for transmitting the signal at the current power level reaches the time duration *T*₁ of power; or to judge whether there is no terminal equipment of the macro base station is handed over to the dormant cell within the first time when the base station of the dormant cell transmits the signal at the current power level;
the first power increasing unit 1802 is configured to increase the current power level by the power increasing level if the result of judgment of the first judging unit 1801 is yes; and
the fifth transmitter 1803 is configured to transmit the signal at the power increased by the power increasing level;
in this embodiment, the activation request may further include a load threshold value of the macro base station.

Figure 19 is another schematic diagram of the structure of the second signal transmitter 1704 of Embodiment 10 of the present invention. When the base station of the dormant cell transmits a signal at the current power level, the second signal transmitter 1704 determines whether to increase the power increasing level, and transmits signals at increased power when the power increasing level is increased. In such a case, the second signal transmitter 1704 includes: a second judging unit 1901, a third judging unit 1902, a second power increasing unit 1903 and a sixth transmitter 1904; wherein,
the second judging unit 1901 is configured to judge whether the time for transmitting the signal at the current power level reaches the time duration of power; or to judge whether there is no terminal equipment of the macro base station is handed over to the dormant cell within the first time when the base station of the dormant cell transmits the signal at the current power level;
the third judging unit 1902 is configured to judge whether the current load of the macro base station is greater than the load threshold value *L_{thrd}* of the macro base station if the result of judgment of the second judging unit 1901 is yes;
the second power increasing unit 1903 is configured to increase the current power level by the power increasing level if the result of judgment of the third judging unit is yes, so as to obtain the power increased by the power increasing level;
and the sixth transmitter 1904 is to transmit the signal at the power increased by the power increasing level.

It can be seen from the above embodiment that the macro base station transmits an activation request to the dormant cell needing to be activated, the activation request including information related to power control. The base station of the dormant cell is made to transmit the signal at the power increased step by step, and needs not to transmit a signal at maximum power, thereby increasing energy efficiency, needing no multiple processes of detection, reducing signaling overhead, avoiding the degradation of the service quality of a terminal in the macro cell, and solving the problem in the relevant art.

An embodiment of the present invention further provides a computer-readable program, wherein when the program is executed in a macro base station, the program enables a computer to carry out the power control method as described in embodiments 1, 3, 6 and 8 in the macro base station.

According to another embodiment of the present invention, there is provided a storage medium in which a computer-readable program is stored, wherein the computer-readable program enables a computer to carry out the power control method as described in embodiments 1, 3, 6 and 8 in a macro base station.

According to another embodiment of the present invention, there is provided a computer-readable program, wherein when the program is executed in a base station of a dormant cell, the program enables a computer to carry out the power control method as described in embodiments 2, 3, 7 and 8 in the dormant cell.

According to another embodiment of the present invention, there is provided a storage medium in which a computer-readable program is stored, wherein the computer-readable program enables a computer to carry out the power control method as described in embodiments 2, 3, 7 and 8 in a base station of a dormant cell.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A power control method, comprising:
transmitting, by a macro base station, a probe request message including probe time to a base station of a dormant cell, so that the dormant cell transmits a signal at maximum power within the probe time;
receiving a measurement report for measuring the signal of the dormant cell returned by terminal equipment of a macro cell;
determining a dormant cell needing to be activated based on the measurement report; and
transmitting an activation request to the base station of the dormant cell needing to be activated, the activation request including a cell ID of the dormant cell needing to be activated and a reduction value of power used by the dormant cell after being activated relative to a maximum power level, so that the base station of the dormant cell transmits a signal at power reduced by the reduction value with respect to the maximum power level after the dormant cell is activated.

2. The method according to claim 1, wherein after the dormant cell needing to be activated is determined, the method further comprises:
determining, by the macro base station, the reduction value according to measurement results and a load expected to be transferred into the dormant cell or the predetermined number of the terminal equipment.

3. The method according to claim 2, wherein the determining, by the macro base station, the reduction value according to measurement results and a load expected to be transferred into the dormant cell comprises:
arranging, by the macro base station, the measurement results returned by the terminal equipment of the macro cell in a decreasing order;
selecting the terminal equipment of the macro base station corresponding to the measurement results and needing to be handed over to the dormant cell according to the load expected to be transferred into the dormant cell and an order of the measurement results from large to small; and
determining, by the macro base station, that the reduction value is the difference between a minimum value of the measurement results returned by the selected terminal equipment of the macro cell and a minimum value of the measurement results returned by all the terminal equipment of the macro cell; or
the reduction value is the difference between a minimum value of the signal intensity returned by the determined terminal equipment of the macro cell needing to be handed over to the dormant cell and a minimum signal intensity value needed by the terminal equipment in normal communication; or
the reduction value is the difference between the minimum value of the measurement results returned by the selected terminal equipment of the macro cell and a predetermined threshold for transmitting the measurement report by the terminal equipment of the macro cell.

4. The method according to claim 2, wherein the determining by the macro base station the reduction value according to measurement results and the predetermined number of the terminal equipment comprises:
arranging, by the macro base station, the measurement results returned by the terminal equipment of the macro cell in a decreasing order;
selecting the terminal equipment of the macro base station corresponding to the measurement results and needing to be handed over to the dormant cell according to the predetermined number of the terminal equipment and an order of the measurement results from large to small;
determining, by the macro base station, that the reduction value is the difference between a minimum value of the measurement results returned by the selected terminal equipment of the macro cell and a minimum value of the measurement results returned by all the terminal equipment of the macro cell; or
the reduction value is the difference between a minimum value of the signal intensity returned by the determined terminal equipment of the macro cell needing to be handed over to the dormant cell and a minimum signal intensity value needed by the terminal equipment in normal communication; or
the reduction value is the difference between the minimum value of the measurement results returned by the selected terminal equipment of the macro cell and a predetermined threshold for transmitting the measurement report by the terminal equipment of the macro cell.

5. A power control method, comprising:
receiving, by a base station of a dormant cell, a probe request message including probe time transmitted by a macro base station and transmitting a signal at maximum power within the probe time;
receiving an activation request including a cell ID of the dormant cell needing to be activated and a reduction value of power used by the dormant cell after being activated relative to a maximum power level transmitted by the macro base station; and
activating, by the base station of the dormant cell, the dormant cell according to the activation request and transmitting a signal at power reduced by the reduction value with respect to the maximum power level.

6. A macro base station, comprising:
a first transmitter, configured to transmit a probe request message including probe time to a base station of a dormant cell, so that the dormant cell transmits a signal at maximum power within the probe time;
a first receiver, configured to receive a measurement report for measuring the signal of the dormant cell returned by terminal equipment of a macro cell;
a first determining unit, configured to determine a dormant cell needing to be activated according to the measurement report; and
a second transmitter, configured to transmit an activation request to the dormant cell needing to be activated, the activation request including a reduction value of power used by the dormant cell after being activated relative to a maximum power level.

7. The macro base station according to claim 6, wherein the base station further comprises:
a second determining unit, configured to determine the reduction value according to measurement results and a load expected to be transferred into the dormant cell or the predetermined number of the terminal equipment.

8. The macro base station according to claim 7, wherein the second determining unit comprises:
a first order arranging unit, configured to arrange the measurement results returned by the terminal equipment of the macro cell in a decreasing order;
a first selector, configured to select the terminal equipment of the macro base station corresponding to the measurement results and needing to be handed over to the dormant cell according to the load expected to be transferred into the dormant cell and an order of the measurement results from large to small; and
a third determining unit, configured to determine that the reduction value is the difference between a minimum value of the measurement results returned by the terminal equipment of the macro cell selected by the first selector and a minimum value of the measurement results returned by all the terminal equipment of the macro cell; or
the reduction value is the difference between a minimum value of the signal intensity returned by the terminal equipment of the macro cell needing to be handed over to the dormant cell selected by the first selector and a minimum signal intensity value needed by the terminal equipment in normal communication; or
the reduction value is the difference between the minimum value of the measurement results returned by the terminal equipment of the macro cell selected by the first selector and a predetermined threshold for transmitting the measurement report by the terminal equipment of the macro cell.

9. The macro base station according to claim 7, wherein the second determining unit comprises:
a second order arranging unit, configured to arrange the measurement results returned by the terminal equipment of the macro cell in a decreasing order;
a second selector, configured to select the terminal equipment of the macro base station corresponding to the measurement results and needing to be handed over to the dormant cell according to the predetermined number of the terminal equipment and an order of the measurement results from large to small; and
a fourth determining unit, configured to determine that the reduction value is the difference between a minimum value of the measurement results returned by the terminal equipment of the macro cell selected by the second selector and a minimum value of the measurement results returned by all the terminal equipment of the macro cell; or
the reduction value is the difference between a minimum value of the signal intensity returned by the terminal equipment of the macro cell needing to be handed over to the dormant cell selected by the second selector and a minimum signal intensity value needed by the terminal equipment in normal communication; or
the reduction value is the difference between the minimum value of the measurement results returned by the terminal equipment of the macro cell selected by the second selector and a predetermined threshold for transmitting the measurement report by the terminal equipment of the macro cell.

10. A base station of dormant cell, comprising:
a first probe request receiver, configured to receive a probe request message including probe time transmitted by a macro base station and to transmit a signal at maximum power within the probe time;
a first activation request receiver, configured to receive an activation request including a cell ID of the dormant cell needing to be activated and a reduction value of power used by the dormant cell after being activated relative to a maximum power level transmitted by the macro base station;
a first activator, configured to activate the dormant cell according to the activation request; and
a first signal transmitter, configured to transmit a signal at power reduced by the reduction value with respect to the maximum power level.

11. A power control method, comprising:
transmitting, by a macro base station, a probe request message including probe time to a base station of a dormant cell, so that the dormant cell transmits a signal at maximum power within the probe time;
receiving a measurement report for measuring the signal of the dormant cell returned by terminal equipment of a macro cell;
determining a dormant cell needing to be activated based on the measurement report; and
transmitting an activation request to the base station of the dormant cell needing to be activated, the activation request including a cell ID of the dormant cell needing to be activated and information related to power control, the information related to power control including an initial power level, a power increasing level and time duration of power or predetermined first time, so that the base station of the dormant cell transmits a signal at power increased step by step based on the information related to power control after the dormant cell is activated.

12. The method according to claim 11, wherein after the dormant cell needing to be activated is determined based on the measurement report, the method further comprises:
setting, by the macro base station, the power increasing level according to a load or the predetermined number of the terminal equipment expected to be transferred into the dormant cell after the power level of the base station of the dormant cell is increased each time.

13. The method according to claim 11, wherein after the dormant cell needing to be activated is determined based on the measurement report, the method further comprises: determining the time duration of power;
the determining the time duration of power comprising:
determining the time duration of power according to a value obtained through multiplying the time needed for each terminal equipment to hand over to the dormant cell by an estimated maximum value of the number of the terminal equipment handed over after the power is increased each time; or
the determining the time duration of power comprising:
obtaining the average time needed in transferring a certain load or handing over a certain number of terminal equipment, or the maximum time needed in transferring a certain load or handing over a certain number of terminal equipment, according to historical information on the terminal equipment of the macro base station handed over to the dormant cell, and taking the time as the time duration of power.

14. The method according to claim 11, wherein after the dormant cell needing to be activated is determined based on the measurement report, the method further comprises: determining the first time;
the determining the first time comprising:
obtaining information on the time interval of two terminal equipment handed over to the dormant cell successively according to historical information on the terminal equipment of the macro base station handed over to the dormant cell, averaging the obtained the time interval, and taking the obtained averaged value as the first time; or
taking the maximum time interval of two terminal equipment handed over to the dormant cell successively as the first time; or
determining the first time according to a moving speed of the terminal equipment.

15. The method according to claim 11, wherein the information related to power control in the activation request further includes a load threshold value of the macro base station.

16. A power control method, comprising:
receiving, by a base station of a dormant cell, a probe request message including probe time transmitted by a macro base station, and transmitting a signal at maximum power within the probe time;
receiving information including a cell ID of a dormant cell needing to be activated and information related to power control, the information related to power control including an initial power level, a power increasing level and time duration of power or predetermined first time; and
activating the dormant cell by the base station of the dormant cell according to an activation request, and transmitting a signal at power increased step by step according to the information related to power control in the activation request.

17. The method according to claim 16, wherein the activation request further includes a load threshold value of the macro base station.

18. The method according to claim 16, wherein the transmitting a signal at power increased step by step according to the information related to power control in the activation request comprises:
judging, by the base station of the dormant cell, whether the time for transmitting the signal at the current power level reaches the time duration of power; or judging whether there is no terminal equipment of the macro base station is handed over to the dormant cell within the first time when the base station of the dormant cell transmits the signal at the current power level; and
increasing, by the base station of the dormant cell, the current power level by the power increasing level if the result of judgment is yes, and transmitting a signal at the power which is increased by the power increasing level.

19. The method according to claim 17, wherein the transmitting a signal at power increased step by step according to the information related to power control in the activation request comprises:
judging, by the base station of the dormant cell, whether the time for transmitting the signal at the current power level reaches the time duration of power; or judging whether there is no terminal equipment of the macro base station is handed over to the dormant cell within the first time when the base station of the dormant cell transmits the signal at the current power level;
judging, by the base station of the dormant cell, whether the current load of macro base station is greater than the load threshold value of the macro base station if the result of judgment is yes;
increasing, by the base station of the dormant cell, the current power level by the power increasing level if the result of judgment is that the current load of the macro base station is greater than the load threshold value of the macro base station, so as to obtain the power increased by the power increasing level; and
transmitting a signal by the base station of the dormant cell at the power increased by the power increasing level.

20. A macro base station, comprising:
a third transmitter, configured to transmit a probe request message including probe time to a base station of dormant cell, so that the dormant cell transmits a signal at maximum power within the probe time;
a second receiver, configured to receive a measurement report for measuring the signal of the dormant cell returned by terminal equipment of a macro cell;
a fifth determining unit, configured to determine a dormant cell needing to be activated based on the measurement report; and
a fourth transmitter, configured to transmit an activation request to the base station of the dormant cell needing to be activated, the activation request including a cell ID of the dormant cell needing to be activated and information related to power control, the information related to power control including an initial power level, a power increasing level and time duration of power or predetermined first time, so that the base station of the dormant cell transmits a signal at power increased step by step based on the information related to power control after the dormant cell is activated.

21. The macro base station according to claim 20, wherein the macro base station further comprises:
an increasing level setting unit, configured to set the power increasing level according to a load or the number of the terminal equipment expected to be transferred into the dormant cell after the power level of the base station of the dormant cell is increased each time.

22. The macro base station according to claim 20, wherein the macro base station further comprises:
a time duration of power determining unit, configured to determine the time duration of power;
the time duration of power determining unit is configured to determine the time duration of power according to a value obtained through multiplying the time needed for each terminal equipment to hand over to the dormant cell by an estimated maximum value of the number of the terminal equipment handed over after the power is increased each time; or to obtain the average time needed in transferring a certain load or handing over a certain number of terminal equipment according to historical information on the terminal equipment of the macro base station handed over to the dormant cell, or to obtain the maximum time needed in transferring a certain load or handing over a certain number of terminal equipment according to historical information on the terminal equipment of the macro base station handed over to the dormant cell, and to take the time as the time duration of power.

23. The macro base station according to claim 20, wherein the macro base station further comprises:
a first time determining unit, configured to determine the first time;
the first time determining unit is configured to obtain information on the time interval of two terminal equipment handed over to the dormant cell successively according to historical information on the terminal equipment of the macro base station handed over to the dormant cell, average the obtained the time interval, and take the obtained averaged value as the first time; or take the maximum time interval of two terminal equipment handed over to the dormant cell successively as the first time; or determine the first time according to a moving speed of the terminal equipment.

24. The macro base station according to claim 20, wherein the information related to power control in the activation request further includes a load threshold value of the macro base station.

25. A base station of dormant cell, comprising:
a second probe request receiver, configured to receive a probe request message including probe time transmitted by a macro base station, and transmit a signal at maximum power within the probe time;
a second activation request receiver, configured to receive information including a cell ID of a dormant cell needing to be activated and information related to power control transmitted by the macro base station, the information related to power control including an initial power level, a power increasing level and time duration of power or predetermined first time;
a second activator, configured to activate the dormant cell based on a activation request; and
a second signal transmitter, configured to transmit a signal at power increased step by step based on the information related to power control in the activation request.

26. The base station of the dormant cell according to claim 25, wherein the activation request further includes a load threshold value of the macro base station.

27. The base station of the dormant cell according to claim 25, wherein the second signal transmitter comprises:
a first judging unit, configured to judge whether the time for transmitting the signal at the current power level reaches the time duration of power; or to judge whether there is no terminal equipment of the macro base station is handed over to the dormant cell within the first time when the base station of the dormant cell transmits the signal at the current power level;
a first power increasing unit, configured to increase the current power level by the power increasing level if the result of judgment of the first judging unit is yes; and
a fifth transmitter, configured to transmit a signal at the power increased by the power increasing level.

28. The base station of the dormant cell according to claim 26, wherein the second signal transmitter comprises:
a second judging unit, configured to judge whether the time for transmitting the signal at the current power level reaches the time duration of power; or to judge whether there is no terminal equipment of the macro base station is handed over to the dormant cell within the first time when the base station of the dormant cell transmits the signal at the current power level;
a third judging unit, configured to judge whether the current load of the macro base station is greater than the load threshold value of the macro base station if the result of judgment of the second judging unit is yes;
a second power increasing unit, configured to increase the current power level by the power increasing level if the result of judgment of the third judging unit is yes, so as to obtain the power increased by the power increasing level; and
a sixth transmitter, configured to transmit a signal at the power increased by the power increasing level.

29. A computer-readable program, wherein when the program is executed in a macro base station, the program enables a computer to carry out the power control method as claimed in any one of claims 1-4 in the macro base station; or when the program is executed in a base station of a dormant cell, the program enables a computer to carry out the power control method as claimed in claim 5 in the base station of the dormant cell.

30. A storage medium in which a computer-readable program is stored, wherein the computer-readable program enables a computer to carry out the power control method as claimed in any one of claims 1-4 in a macro base station; or the computer-readable program enables a computer to carry out the power control method as claimed in claim 5 in a base station of a dormant cell.

31. A computer-readable program, wherein when the program is executed in a macro base station, the program enables a computer to carry out the power control method as claimed in any one of claims 11-15 in the macro base station; or the program enables a computer to carry out the power control method as claimed in any one of claims 16-19 in a base station of a dormant cell.

32. A storage medium in which a computer-readable program is stored, wherein the computer-readable program enables a computer to carry out the power control method as claimed in any one of claims 11-15 in a macro base station; or the computer-readable program enables a computer to carry out the power control method as claimed in any one of claims 16-19 in a base station of a dormant cell.
